(19) Europäisches Patentamt
European Patent Office
Office européen des brevets

(11) **EP 4 780 024 A1**

(12) **EUROPEAN PATENT APPLICATION**
published in accordance with Art. 153(4) EPC

(43) Date of publication:
**22.07.2026 Bulletin 2026/30**

(21) Application number: **23951916.8**

(22) Date of filing: **15.09.2023**

(51) International Patent Classification (IPC):
**H04W 4/02** *(2018.01)*

(52) Cooperative Patent Classification (CPC):
**H04W 4/02**

(86) International application number:
**PCT/CN2023/119196**

(87) International publication number:
**WO 2025/054987 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventors:
• **ZHANG, Boyuan
  Beijing 100085 (CN)**
• **MU, Qin
  Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **REPORTING METHOD AND APPARATUS, COMMUNICATION DEVICE, COMMUNICATION SYSTEM, AND STORAGE MEDIUM**

(57) The present disclosure provides a reporting method and apparatus, a device, and a storage medium. The method comprises: a first device receives a positioning purpose reference signal sent by at least one second device, and determines first information on the basis of the positioning purpose reference signal, the first information being used for implementing artificial intelligence (AI)-based positioning; the first device performs first processing on the first information to obtain second information, the first processing being used for performing dimensionality reduction on the first information; and the first device reports to a third device on the basis of the second information. The method of the present disclosure reduces the information transmission overhead, saves transmission resources, the model storage overhead and the calculation overhead, and improves the AI-based positioning efficiency.

EP 4 780 024 A1

FIG. 3A

| receiving, by a first device, a positioning purpose reference signal sent by at least one second device | — 3101 |
| the first device determines first information based on the positioning purpose reference signal | — 3102 |
| the first device performs a first processing on the first information to obtain second information | — 3103 |
| the first device reports based on the second information | — 3104 |

## Description

## TECHNICAL FIELD

The present disclosure relates to the field of communication technologies, and in particular relates to a reporting method and a reporting apparatus, a communication device, a communication system and a storage medium.

## BACKGROUND

In a new radio (NR) system, artificial intelligence (AI)-based positioning is introduced to improve positioning accuracy.

## SUMMARY

The present disclosure provide a reporting method and a reporting apparatus, a communication device, a communication system and a storage medium.

According to a first aspect of embodiments of the present disclosure, there is provided a reporting method. The method includes at least one of:

receiving, by a first device, a positioning purpose reference signal sent by at least one second device, and determining first information based on the positioning purpose reference signal, in which the first information is used to implement an artificial intelligence (AI) positioning;
performing, by the first device, a first processing on the first information to obtain second information, in which the first processing is used to perform a dimensionality reduction on the first information; or
reporting, by the first device, to a third device based on the second information.

According to a second aspect of embodiments of the present disclosure, there is provided a reporting method. The method includes at least one of:

receiving, by a third device, a report sent by a first device based on second information, in which the second information is obtained by performing a first processing to first information, the first processing is used to perform a dimensionality reduction on the first information, the first information is used to implement an AI positioning, the first information is determined according to a positioning purpose reference signal, and the positioning purpose reference signal is sent to the first device by at least one second device; or
performing, by the third device, the AI positioning based on the report sent by the first device.

According to a third aspect of embodiments of the present disclosure, there is provided a reporting method, performed by a communication system including a first device and a third device. The method including at least one of:

receiving, by the first device, a positioning purpose reference signal sent by at least one second device, and determining first information based on the positioning purpose reference signal, in which the first information is used to implement an AI positioning;
performing, by the first device, a first processing on the first information to obtain second information, in which the first processing is used to perform a dimensionality reduction on the first information;
reporting, by the first device, to the third device based on the second information;
receiving, by the third device, a report sent by the first device based on the second information; or
performing, by the third device, the AI positioning based on the report sent by the first device.

According to a fourth aspect of embodiments of the present disclosure, there is provided a first device. The first device includes at least one of:

a receiving module, configured to receive a positioning purpose reference signal sent by at least one second device, and to determine first information based on the positioning purpose reference signal, in which the first information is used to implement an AI positioning;
a processing module, configured to perform a first processing on the first information to obtain second information, in which the first processing is used to perform a dimensionality reduction on the first information; or
a sending module, configured to report to a third device based on the second information.

According to a fifth aspect of embodiments of the present disclosure, there is provided a third device. The third device includes at least one of:

a receiving module, configured to receive a report sent by a first device based on second information, in which the second information is obtained by performing a first processing to first information, the first processing is used to perform a dimensionality reduction on the first information, the first information is used to implement an AI positioning, the first information is determined according to a positioning purpose reference signal, and the positioning purpose reference signal is sent to the first device by at least one second device; or
a processing module, configured to perform the AI positioning based on the report sent by the first device.

According to a sixth aspect of embodiments of the present disclosure, there is provided a communication device. The communication device includes:

one or more processors,
in which the one or more processors are configured to invoke instructions to cause the communication device to perform the reporting method described in the first aspect or the second aspect.

According to a seventh aspect of embodiments of the present disclosure, there is provided a communication system, including a first device and a third device, in which the first device is configured to implement the reporting method described in the first aspect, and the third device is configured to implement the reporting method described in the second aspect.

According to an eighth aspect of embodiments of the present disclosure, there is provided a storage medium having stored instructions that, when executed on a communication device, cause the communication device to perform the reporting method described in the first aspect or the second aspect.

## BRIEF DESCRIPTION OF THE DRAWINGS

The above mentioned and other aspects and advantages of embodiments of the present disclosure will become apparent and more readily appreciated from the following descriptions made with reference to the accompanying drawings.

FIG. 1 is a schematic diagram illustrating an architecture of a communication system provided in an embodiment of the present disclosure.
FIG. 2A is an interaction diagram illustrating a reporting method provided in an embodiment of the present disclosure.
FIG. 3A is a flow chart illustrating a reporting method provided in yet another embodiment of the present disclosure.
FIG. 4A is a flow chart illustrating a reporting method provided in yet another embodiment of the present disclosure.
FIG. 5A is a flow chart illustrating a reporting method provided in yet another embodiment of the present disclosure.
FIG. 5B is a flow chart illustrating a reporting method provided in yet another embodiment of the present disclosure.
FIG. 6A is a block diagram illustrating a first device provided in an embodiment of the present disclosure.
FIG. 6B is a block diagram illustrating a third device provided in an embodiment of the present disclosure.
FIG. 7A is a block diagram illustrating a communication device provided in an embodiment of the present disclosure.

FIG. 7B is a block diagram illustrating a chip provided in an embodiment of the present disclosure.

## DETAILED DESCRIPTION

Embodiments of the present disclosure provide a reporting method and a reporting apparatus, a communication device, a communication system and a storage medium.

According to a first aspect of embodiments of the present disclosure, there is provided a reporting method. The method is performed by a first device, and includes at least one of:

receiving, by the first device, a positioning purpose reference signal sent by at least one second device, and determining first information based on the positioning purpose reference signal, in which the first information is used to implement an artificial intelligence (AI) positioning;
performing, by the first device, a first processing on the first information to obtain second information, in which the first processing is used to perform a dimensionality reduction on the first information; or
reporting, by the first device, to a third device based on the second information.

In the above-described embodiments, after the first device determines the first information for implementing the AI positioning based on the positioning purpose reference signal, instead of directly reporting original first information to the third device to implement the AI positioning, the first device performs the first processing on the first information to obtain the second information by performing the dimensionality reduction on the first information, and then reports to the third device based on the second information, such that the third device inputs the received information reported by the first device into an AI model deployed on the third device to implement the AI positioning. Therefore, in embodiments of the present disclosure, the information for AI positioning reported by the first device to the third device is reported based on the information subjected to the dimensionality reduction, such that the dimensionality of the information for the AI positioning reported by the first device to the third device is smaller, thereby reducing information transmission overhead and saving transmission resources. Moreover, the dimensionality of the information for the AI positioning received by the third device is smaller, such that data dimensionality of input data of the AI model is smaller, and since complexity of the AI model is positively correlated with the data dimensionality of the input data of the AI model, the complexity of the AI model is also reduced, thereby saving model storage overhead and calculation overhead, and improving efficiency of the AI positioning.

In conjunction with some embodiments of the first aspect, in some embodiments, performing the first processing on the first information to obtain the second information includes at least one of:

> performing a singular value decomposition on the first information to obtain the second information;
> performing an eigenvalue decomposition on the first information to obtain the second information;
> performing a principal component analysis (PCA) on the first information to obtain the second information; or
> performing a truncation processing on the first information to obtain the second information.

In the above-described embodiments, a method for the first device to specifically perform the dimensionality reduction on the first information is provided to ensure that the first device may successfully perform the dimensionality reduction on the first information, thereby achieving the purpose of reducing the information transmission overhead, saving the transmission resources, saving the model storage overhead and calculation overhead, and improving the efficiency of AI positioning.

In conjunction with some embodiments of the first aspect, in some embodiments, the first information includes an $M \times N$ matrix, where M and N are both positive integers, in which M is a numerical count of the at least one second device sending the positioning purpose reference signal, and N is a time domain sampling dimension of the positioning purpose reference signal received by the first device, and an element at an $i^{th}$ row and a $j^{th}$ column of the $M \times N$ matrix is determined based on data at a $j^{th}$ time domain sampling position of a positioning purpose reference signal sent by an $i^{th}$ second device and received by the first device.

In conjunction with some embodiments of the first aspect, in some embodiments, performing the singular value decomposition on the first information to obtain the second information includes:

> performing the singular value decomposition on the first information to obtain a unitary matrix U, a first matrix $\Sigma$ and a unitary matrix V corresponding to the first information; and
> determining the second information according to at least one of the unitary matrix U, the first matrix $\Sigma$, or the unitary matrix V.

In conjunction with some embodiments of the first aspect, in some embodiments, determining the second information according to at least one of the unitary matrix U, the first matrix $\Sigma$, or the unitary matrix V includes at least one of:

> determining at least one of the unitary matrix U, the first matrix $\Sigma$, or the unitary matrix V as the second information;
> truncating part of data from at least one of the unitary matrix U, the first matrix $\Sigma$, or the unitary matrix V, and

> determining the data truncated from the at least one of the unitary matrix U, the first matrix $\Sigma$, or the unitary matrix V as the second information; or
> respectively truncating part of data from the unitary matrix U, the first matrix $\Sigma$, and the unitary matrix V, and determining a product of the data truncated from the unitary matrix U, the data truncated from the first matrix $\Sigma$, and the data truncated from the unitary matrix V as the second information.

In conjunction with some embodiments of the first aspect, in some embodiments, performing the eigenvalue decomposition on the first information to obtain the second information includes:

> performing the eigenvalue decomposition on the first information to obtain an eigenvector matrix Q and a second matrix $\Sigma$ corresponding to the first information; and
> determining at least one of the eigenvector matrix Q or the second matrix $\Sigma$ as the second information; and/or truncating part of data from the eigenvector matrix Q and/or the second matrix $\Sigma$, and determining the data truncated from the at least one of the eigenvector matrix Q or the second matrix $\Sigma$ as the second information.

In conjunction with some embodiments of the first aspect, in some embodiments, performing the PCA on the first information to obtain the second information includes:
performing the PCA on the first information to obtain third information, and determining the third information as the second information; and/or truncating part of data from the third information, and determining the data truncated as the second information.

In the above-described embodiments, a method for the first device to specifically perform the dimensionality reduction on the first information via the singular value decomposition, the eigenvalue decomposition and/or the PCA is provided to ensure that the first device may successfully perform the dimensionality reduction on the first information, thereby achieving the purpose of reducing the information transmission overhead, saving the transmission resources, saving the model storage overhead and calculation overhead, and improving the efficiency of AI positioning. Moreover, in a case where the singular value decomposition, the eigenvalue decomposition and the PCA are used to perform the dimensionality reduction on the first information, if the first device decomposes the first information according to the singular value decomposition or the eigenvalue decomposition and obtains the sub-matrices, or analyzes the first information according to the PCA and obtains the third information, the first device may further truncate the sub-matrices or the third information, and then obtains the second information according to the truncated data. Since algorithms of the singular value decomposition, the eigenvalue decomposition and PCA themselves may perform the dimensionality reduction on the first information, and on this basis, the sub-matrices or third information obtained by the singular value decomposition, the eigenvalue decomposition or the PCA is further truncated in the present disclosure, such that the data dimensionality may be greatly reduced, and thus the purpose of reducing the information transmission overhead, saving the transmission resources, saving the model storage overhead and calculation overhead, and improving the efficiency of AI positioning is greatly achieved. Furthermore, the singular value decomposition, the eigenvalue decomposition, and the PCA may not only implement the dimensionality reduction on the original data, but also retain key feature information of the original data when obtaining low-dimensional data. Therefore, in a case where the second information is obtained by performing the dimensionality reduction on the first information according to the singular value decomposition, the eigenvalue decomposition and/or the PCA, the second information obtained after the dimensionality reduction may be ensured to include the key feature of the original first information. Therefore, in a case where the first device subsequently reports to the third device based on the second information obtained through the dimensionality reduction, and the third device implements the AI positioning according to the report of the first device, it may not only save the cost and improve the efficiency of AI positioning, but also ensure the accuracy of the AI positioning.

In conjunction with some embodiments of the first aspect, in some embodiments, performing the truncation processing on the first information to obtain the second information includes at least one of:

truncating data at first K time domain sampling positions from data at N time domain sampling positions corresponding to a reference signal sent by the second device to obtain the second information;
uniformly truncating K pieces of data from data at N time domain sampling positions corresponding to a reference signal sent by the second device to obtain the second information; or
truncating top K pieces of data with a highest power value from data at N time domain sampling positions corresponding to a reference signal sent by the second device to obtain the second information,
in which K is a positive integer, and K≤N.

In the above-described embodiments, a method for the first device to specifically perform the dimensionality reduction on first information through the truncation processing is provided to ensure that the first device may successfully perform the dimensionality reduction on the first information, thereby achieving the purpose of reducing the information transmission overhead, saving the transmission resources, saving the model storage overhead and calculation overhead, and improving the efficiency of AI positioning. Moreover, in a case where the above-mentioned truncation processing is used to truncate the data at the first K time domain sampling positions from the data at the N time domain sampling positions corresponding to the reference signal sent by the second device, or truncate the top K pieces of data with the highest power value from the data at the N time domain sampling positions corresponding to the reference signal sent by the second device, it may be ensured that the data with the higher power value in the first information is truncated as the second information, thereby ensuring that the key feature of the original first information may be retained in the second information. Moreover, in a case where the above-mentioned truncation processing uniformly truncates the K pieces of data from the data at the N time domain sampling positions corresponding to the reference signal sent by the second device, a distribution feature of the truncated data may be made close to a distribution feature of the data in the first information, thereby making the second information retain the distribution feature of the data in the original first information. That is, in a case where the truncation processing performs the dimensionality reduction on the first information, the distribution feature of the data in the first information is not destroyed or the key data in the first information is not omitted. Therefore, in a case where the first device subsequently reports to the third device based on the second information obtained through the dimensionality reduction, and the third device implements the AI positioning according to the report of the first device, it may not only save the cost and improve the efficiency of AI positioning, but also ensure the accuracy of the AI positioning.

In conjunction with some embodiments of the first aspect, in some embodiments, the first information includes a channel impulse response (CIR), and the M×N matrix is a complex matrix, and data in the M×N matrix is complex data; and
data in the second information is complex data.

In conjunction with some embodiments of the first aspect, in some embodiments, reporting to the third device based on the second information includes at least one of:

reporting the second information to the third device; or
reporting a power value of the data in the second information to the third device.

In conjunction with some embodiments of the first aspect, in some embodiments, the power value is a modulus of the complex data in the second information.

In the above-described embodiments, a method for the first device to specifically report to the third device based on the second information is provided to ensure that the first device may successfully report the information for the AI positioning to the third device based on the second information, thereby ensuring that the third device may subsequently implement the AI positioning based on the information for the AI positioning reported by the first device, and ensuring the successful execution of an AI positioning procedure.

In conjunction with some embodiments of the first aspect, in some embodiments, the first device is a terminal, the second device is a base station, and the positioning purpose reference signal is a positioning reference signal (PRS); or

the first device is a base station, the second device is a terminal, and the positioning purpose reference signal is a sounding reference signal-position (SRS-Pos).

In conjunction with some embodiments of the first aspect, in some embodiments, the third device is a location management function (LMF).

According to a second aspect of embodiments of the present disclosure, there is provided a reporting method. The method is performed by a terminal, and the method includes at least one of:

receiving, by a third device, a report sent by a first device based on second information, in which the second information is obtained by performing a first processing to first information, the first processing is used to perform a dimensionality reduction on the first information, the first information is used to implement an AI positioning, the first information is determined according to a positioning purpose reference signal, and the positioning purpose reference signal is sent to the first device by at least one second device; or

performing, by the third device, the AI positioning based on the report sent by the first device.

In the above-described embodiments, after the first device determines the first information for implementing the AI positioning based on the positioning purpose reference signal, instead of directly reporting the original first information to the third device to implement the AI positioning, the first device performs the first processing on the first information to obtain the second information by performing the dimensionality reduction on the first information, and then reports to the third device based on the second information, such that the third device inputs the received information reported by the first device into an AI model deployed on the third device to implement the AI positioning. Therefore, in embodiments of the present disclosure, the information for AI positioning reported by the first device to the third device is reported based on the information subjected to the dimensionality reduction, such that the dimensionality of the information for the AI positioning reported by the first device to the third device is smaller, thereby reducing information transmission overhead and saving transmission resources. Moreover, the dimensionality of the information for the AI positioning received by the third device is smaller, such that data dimensionality of input data of the AI model is smaller, and since complexity of the AI model is positively correlated with the data dimensionality of the input data of the AI model, the complexity of the AI model is reduced, thereby saving model storage overhead and calculation overhead, and improving efficiency of the AI positioning.

In conjunction with some embodiments of the second aspect, in some embodiments, the first information includes an $M \times N$ matrix, where M and N are both positive integers, in which M is a numerical count of the at least one second device sending the positioning purpose reference signal, and N is a time domain sampling dimension of the positioning purpose reference signal received by the first device, and an element at an $i^{th}$ row and a $j^{th}$ column of the $M \times N$ matrix is determined based on data at a $j^{th}$ time domain sampling position of a positioning purpose reference signal sent by an $i^{th}$ second device and received by the first device.

In conjunction with some embodiments of the second aspect, in some embodiments, receiving the report sent by the first device based on the second information includes at least one of:

receiving the second information reported by the first device; or

receiving a power value of data in the second information reported by the first device.

In conjunction with some embodiments of the second aspect, in some embodiments, performing the AI positioning based on the report sent by the first device includes:

obtaining an AI positioning result by inputting information reported by the first device into an AI model.

According to a third aspect of embodiments of the present disclosure, there is provided a reporting method. The method is performed by a communication system including a first device and a third device, and the method includes at least one of:

receiving, by the first device, a positioning purpose reference signal sent by at least one second device, and determining first information based on the positioning purpose reference signal, in which the first information is used to implement an AI positioning;

performing, by the first device, a first processing on the first information to obtain second information, in which the first processing is used to perform a dimensionality reduction on the first information;

reporting, by the first device, to the third device based on the second information;

receiving, by the third device, a report sent by the first device based on the second information; or

performing, by the third device, the AI positioning based on the report sent by the first device.

According to a fourth aspect of embodiments of the present disclosure, there is provided a first device. The first device includes at least one of:

a receiving module, configured to receive a positioning purpose reference signal sent by at least one second device, and to determine first information based on the positioning purpose reference signal, in which the first information is used to implement an AI positioning;
a processing module, configured to perform a first processing on the first information to obtain second information, in which the first processing is used to perform a dimensionality reduction on the first information; or
a sending module, configured to report to a third device based on the second information.

In conjunction with some embodiments of the fourth aspect, in some embodiments, the processing module is configured to perform at least one of:

performing a singular value decomposition on the first information to obtain the second information;
performing an eigenvalue decomposition on the first information to obtain the second information;
performing a principal component analysis (PCA) on the first information to obtain the second information; or
performing a truncation processing on the first information to obtain the second information.

In conjunction with some embodiments of the fourth aspect, in some embodiments, the first information includes an M×N matrix, where M and N are both positive integers, in which M is a numerical count of the at least one second device sending the positioning purpose reference signal, and N is a time domain sampling dimension of the positioning purpose reference signal received by the first device, and an element at an $i^{th}$ row and a $j^{th}$ column of the M×N matrix is determined based on data at a $j^{th}$ time domain sampling position of a positioning purpose reference signal sent by an $i^{th}$ second device and received by the first device.

In conjunction with some embodiments of the fourth aspect, in some embodiments, the processing module is further configured to:

perform the singular value decomposition on the first information to obtain a unitary matrix U, a first matrix Σ and a unitary matrix V corresponding to the first information; and
determine the second information according to at least one of the unitary matrix U, the first matrix Σ, or the unitary matrix V.

In conjunction with some embodiments of the fourth aspect, in some embodiments, the processing module is further configured to perform at least one of:

determining at least one of the unitary matrix U, the first matrix Σ, or the unitary matrix V as the second information;
truncating part of data from at least one of the unitary matrix U, the first matrix Σ, or the unitary matrix V, and determining the data truncated from the at least one of the unitary matrix U, the first matrix Σ, or the unitary matrix V as the second information; or
respectively truncating part of data from the unitary matrix U, the first matrix Σ, and the unitary matrix V, and determining a product of the data truncated from the unitary matrix U, the data truncated from the first matrix Σ, and the data truncated from the unitary matrix V as the second information.

In conjunction with some embodiments of the fourth aspect, in some embodiments, the processing module is further configured to:

perform the eigenvalue decomposition on the first information to obtain an eigenvector matrix Q and a second matrix Σ corresponding to the first information; and
determine at least one of the eigenvector matrix Q or the second matrix Σ as the second information; and/or truncating part of data from the eigenvector matrix Q and/or the second matrix Σ, and determining the data truncated from the at least one of the eigenvector matrix Q or the second matrix Σ as the second information.

In conjunction with some embodiments of the fourth aspect, in some embodiments, the processing module is further configured to:
perform the PCA on the first information to obtain third information, and determining the third information as the second information; and/or truncating part of data from the third information, and determining the data truncated as the second information.

In conjunction with some embodiments of the fourth aspect, in some embodiments, performing the truncation processing on the first information to obtain the second information includes at least one of:

truncating data at first K time domain sampling positions from data at N time domain sampling positions corresponding to a reference signal sent by the second device to obtain the second information;
uniformly truncating K pieces of data from data at N time domain sampling positions corresponding to a reference signal sent by the second device to obtain the second information; or
truncating top K pieces of data with a highest power value from data at N time domain sampling positions corresponding to a reference signal sent by the second device to obtain the second information,
in which K is a positive integer, and K≤N.

In conjunction with some embodiments of the fourth aspect, in some embodiments, the first information includes a channel impulse response (CIR), and the M×N matrix is a complex matrix, and data in the M×N matrix is complex data; and
data in the second information is complex data.

In conjunction with some embodiments of the fourth aspect, in some embodiments, the sending module is further configured to perform at least one of:

> reporting the second information to the third device; or
> reporting a power value of the data in the second information to the third device.

In conjunction with some embodiments of the fourth aspect, in some embodiments, the power value is a modulus of the complex data in the second information.

In conjunction with some embodiments of the fourth aspect, in some embodiments, the first device is a terminal, the second device is a base station, and the positioning purpose reference signal is a PRS; or
the first device is a base station, the second device is a terminal, and the positioning purpose reference signal is an SRS-Pos.

In conjunction with some embodiments of the fourth aspect, in some embodiments, the third device is an LMF.

According to a fifth aspect of embodiments of the present disclosure, there is provided a third device. The third device includes at least one of:

> a receiving module, configured to receive a report sent by a first device based on second information, in which the second information is obtained by performing a first processing to first information, the first processing is used to perform a dimensionality reduction on the first information, the first information is used to implement an AI positioning, the first information is determined according to a positioning purpose reference signal, and the positioning purpose reference signal is sent to the first device by at least one second device; or
> a processing module, configured to perform the AI positioning based on the report sent by the first device.

In conjunction with some embodiments of the fifth aspect, in some embodiments, the first information includes an M×N matrix, where M and N are both positive integers, in which M is a numerical count of the at least one second device sending the positioning purpose reference signal, and N is a time domain sampling dimension of the positioning purpose reference signal received by the first device, and an element at an $i^{th}$ row and a $j^{th}$ column of the M×N matrix is determined based on data at a $j^{th}$ time domain sampling position of a positioning purpose reference signal sent by an $i^{th}$ second device and received by the first device.

In conjunction with some embodiments of the fifth aspect, in some embodiments, the receiving module is further configured to perform at least one of:

> receiving the second information reported by the first device; or
> receiving a power value of data in the second information reported by the first device.

In conjunction with some embodiments of the fifth aspect, in some embodiments, the processing module is further configured to:
obtain an AI positioning result by inputting information reported by the first device into an AI model.

According to a sixth aspect of embodiments of the present disclosure, there is provided a communication device, including: one or more processors; and one or more memories for storing instructions, in which the one or more processors are configured to invoke the instructions to cause the communication device to perform the reporting method described in the first aspect, implementations of the first aspect, the second aspect and implementations of the second aspect.

According to a seventh aspect of embodiments of the present disclosure, there is provided a communication system, including a first device and a third device, in which the first device is configured to implement the reporting method described in the first aspect and implementations of the first aspect, and the third device is configured to implement the reporting method described in the second aspect and implementations of the second aspect.

According to an eighth aspect of embodiments of the present disclosure, there is provided a storage medium having stored instructions that, when executed on a communication device, cause the communication device to perform the reporting method described in the first aspect, implementations of the first aspect, the second aspect and implementations of the second aspect.

According to a ninth aspect of embodiments of the present disclosure, there is provided a program product that, when executed by a communication device, causes the communication device to perform the reporting method described in the first aspect, implementations of the first aspect, the second aspect and implementations of the second aspect.

According to a tenth aspect of embodiments of the present disclosure, there is provided a computer program that, when executed on a computer, causes the computer to perform the reporting method described in the first aspect, implementations of the first aspect, the second aspect and implementations of the second aspect.

It may be understood that the above-described first device, third device, communication device, communication system, storage medium, program product and computer program are all used to perform the method proposed in embodiments of the present disclosure. Therefore, for the beneficial effects that may be achieved, reference may be made to the beneficial effects in the corresponding methods, which is not repeated here.

Embodiments of the present disclosure provide the title of the invention. In some embodiments, terms such as "reporting method" may be used interchangeably with "information processing method", "information sending method", and "information receiving method"; terms such as "communication device" may be used interchangeably with "information processing device", "information sending device", and "information receiving device"; and terms such as "information processing system", "communication system", "information sending system", and "information receiving system" may also be used interchangeably.

Embodiments of the present disclosure are not exhaustive, but are merely illustrative of some embodiments, and are not intended to be a specific limitation on the scope of protection of the present disclosure. In the absence of contradictions, each step in a certain embodiment may be implemented as an independent embodiment, and the steps may be arbitrarily combined, for example, a solution in which some steps are removed in a certain embodiment may also be implemented as an independent embodiment, and the order of each step in a certain embodiment may be arbitrarily exchanged, and further, implementations in a certain embodiment may be arbitrarily combined. Furthermore, various embodiments may be arbitrarily combined, for example, some or all steps of different embodiments may be arbitrarily combined, and a certain embodiment may be arbitrarily combined with implementations of other embodiments.

In respective embodiments of the present disclosure, if there is no special description and logical conflict, the terms and/or descriptions among the embodiments are consistent and may be referenced to each other, and technical features in different embodiments may be combined to form new embodiments according to their intrinsic logical relationships.

The terms used in embodiments of the present disclosure are for the purpose of describing specific embodiments only, and is not intended to limit the present disclosure.

In embodiments of the present disclosure, unless otherwise specified, elements represented in the singular form, such as "a", "an", "the", "above", "said", "preceding", "this", and the like, may represent "one and only one", or may represent "one or more", "at least one", and the like. For example, in a case where an article such as "a", "an", and "the", in English is used in translation, a noun after the article may be understood as a singular expression or a plural expression.

In embodiments of the present disclosure, "multiple" refers to two or more.

In some embodiments, terms such as "at least one of", "one or more", "a plurality of", "multiple", may be replaced with each other.

In some embodiments of the present disclosure, descriptions such as "at least one of A, B or C", "A and/or B and/or C" include a case where any one of A, B or C exists alone, and any combination of any plurality of A, B, C..., and each case may exist alone. For example, "at least one of A, B or C" includes situations where A exists alone, B exists alone, C exists alone, a combination of A and B, a combination of A and C, a combination of B and C and a combination of A and B and C. For example, "A and/or B" includes situations where A exists alone, B exists alone and a combination of A and B.

In some embodiments, "A in one case and B in another", "in response to one case A and in response to another case B" may include the following technical solutions depending on the situation: in some embodiments A (A is executed regardless of B); in some embodiments B (B is executed regardless of A); in some embodiments, execution is selected from A and B (A and B are selectively executed); in some embodiments A and B (both A and B are executed). The same applies when there are more branches such as A, B, and C.

The prefix words such as "first" and "second" in embodiments of the present disclosure are only for distinguishing different description objects, and do not constitute restrictions on the position, order, priority, quantity, content, etc. of the description objects. For statements of the description objects, please refer to the description of the context in the claims or the embodiments, and should not constitute unnecessary restrictions due to the use of the prefix words. For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "rank", the ordinal number before "rank" in "first rank" and "second rank" does not limit the priority between "ranks". For another example, the number of description objects is not limited by ordinal numbers, and may be one or more. Taking "first device" as an example, the number of "devices" may be one or more. Furthermore, objects modified by different prefixes may be the same or different, for example, if the description object is the "device", the "first device" and the "second device" may be the same device or different devices, and the types thereof may be the same or different. For another example, when the description object is "information", the "first information" and the "second information" may be the same information or different information, and the contents thereof may be the same or different.

In some embodiments, terms such as "including A", "containing A", "for indicating A", "carrying A", may be interpreted as directly carrying A, or may be interpreted as indirectly indicating A.

In some embodiments, terms such as "in response to", "in response to determining that", "in a case where", "when", "upon", "if", and the like may be replaced with each other.

In some embodiments, terms such as "greater than", "greater than or equal to", "not smaller than", "more than", "more than or equal to", "not lower than", "higher", "higher than or equal to", "not less than", "above" and the like may be replaced with each other, and terms such as "smaller than", "smaller than or equal to", "not greater than", "less than", "less than or equal to", "not more than", "lower than", "lower than or equal to", "not higher than", "below" and the like may be replaced with each other.

In some embodiments, the apparatus and the device may be interpreted as physical or virtual, and the names thereof are not limited to those described in embodiments. Terms such as "apparatus", "equipment", "device", "circuit", "network element", "node", "function", "unit", "section", "system", "network", "chip", "chip system", "entity", "body" and the like may be replaced with each other.

In some embodiments, the "network" may be interpreted as an apparatus included in the network, for example, an access network device, a core network device, or the like.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "component carrier", "bandwidth part (BWP)" and the like may be replaced with each other.

In some embodiments, terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like may be replaced with each other.

In some embodiments, the access network device, the core network device, or the network device may be replaced with the terminal. For example, each embodiment of the present disclosure may be applied to a configuration in which communication between the access network device, the core network device, or the network device and the terminal is replaced with communication between multiple terminals (for example, it may also be referred to as a device-to-device (D2D), a vehicle-to-everything (V2X), or the like). In this case, the terminal may have all or a part of the functions of the access network device. Further, terms such as "uplink" and "downlink" may be replaced with terms corresponding to communication between terminals (for example, "side"). For example, an uplink channel, a downlink channel and the like may be replaced with a side channel, and an uplink, a downlink and the like may be replaced with a side link.

In some embodiments, the terminal may be replaced with the access network device, the core network device, or the network device. In this case, the access network device, the core network device, or the network device may have all or a part of the functions of the terminal.

In some embodiments, obtaining data, information and the like may comply with laws and regulations of the country where it is located.

In some embodiments, data, information and the like may be obtained after obtaining the user's consent.

Further, each element, each row, or each column in the table of embodiments of the present disclosure may be implemented as an independent embodiment, and any combination of any element, any row, or any column may also be implemented as an independent embodiment.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that may be understood by the communication device, and the values or representations of the parameters may be other values or representations that may be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

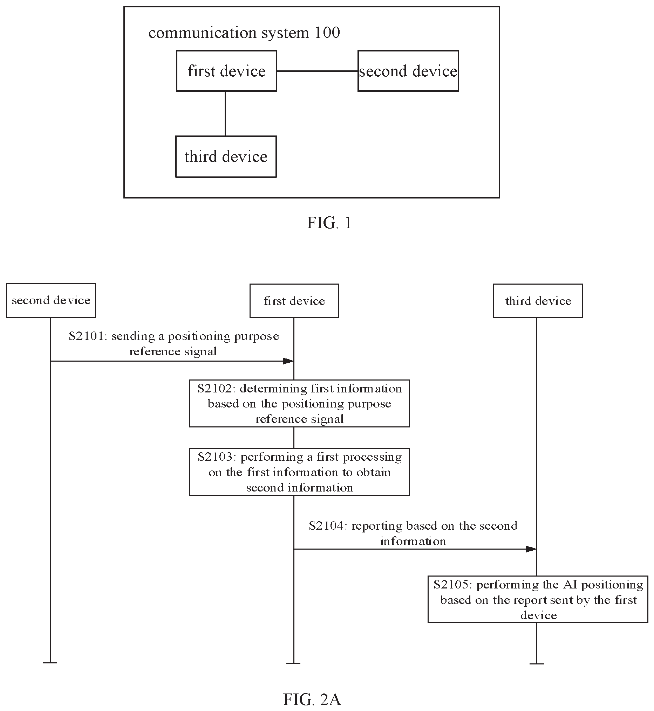

FIG. 1 is a schematic diagram illustrating an architecture of a communication system according to embodiments of the present disclosure. As shown in FIG. 1, the communication system 100 includes a first device, a second device and a third device. The first device may be a channel data measurement node, for example, a network device or a terminal, and the second device may be a reference signal sending node, for example, the network device or the terminal. In a case where the first device is the network device, the second device is the terminal; and in a case where the first device is the terminal, the second device is the network device. The third device may be a positioning model inference node, for example, a core network device (such as an LMF). The network device may include at least one of an access network device or the core network device.

In some embodiments, the terminal includes, for example, at least one of a mobile phone, a wearable device, an Internet of Things device, an automobile with a communication function, a smart car, a pad, a computer with a wireless transmission and reception function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home, which is not limited in the present disclosure.

In some embodiments, the access network device is, for example, a node or device that accesses a terminal to a wireless network, and the access network device may include at least one of an evolved NodeB (eNB), a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center, a base station in a 6G communication system, an open base station (RAN), a cloud base station (Cloud RAN), a base station in another communication system, and an access node in a wireless fidelity (WiFi) system, which is not limited in the present disclosure.

In some embodiments, the technical solution of the present disclosure may be applied to an Open RAN architecture. Moreover, an interface between or within the access network device according to embodiments of the present disclosure may be changed to an internal interface of an Open RAN, and the flow and information interaction between the internal interfaces may be implemented by software or a program.

In some embodiments, the access network device may be composed of a central unit (CU) and a distributed unit (DU), in which the CU may also be referred to as a control unit, and the protocol layer of the access network device may be separated by adopting the structure of the CU-DU, some functions of the protocol layer are centrally controlled by the CU, and some or all functions of the remaining protocol layer are distributed in the DU, and the DU is centrally controlled by the CU, but is not limited thereto.

In some embodiments, the core network device may be one device including one or more network elements, or may be multiple devices or groups of devices including all or part of the above one or more network elements, respectively. The network element may be virtual or physical. The core network includes, for example, at least one of an evolved packet core (EPC), a 5G core network (5GCN), and a next generation core (NGC). Alternatively, the core network device may be a location management function network element. For example, the location management functional network element includes a location server, which may be implemented as any of: the LMF, an enhanced serving mobile location centre (E-SMLC), a secure user plane location (SUPL) and an SUPL location platform (SUPLLP).

It may be understood that the communication system described in embodiments of the present disclosure is to more clearly explain the technical solution of embodiments of the present disclosure, and does not constitute a limitation on the technical solution provided by embodiments of the present disclosure. As those skilled in the art know, with the evolution of the system architecture and the emergence of new business scenarios, the technical solution provided by embodiments of the present disclosure is applicable to similar technical problems.

The following embodiments of the present disclosure may be applied to the communication system 100 illustrated in FIG. 1 or a part of the subjects, which is not limited in embodiments of the present disclosure. Each subject shown in FIG. 1 is an example, and the communication system may include all or some of the subjects shown in FIG. 1, or other subjects other than those shown in FIG. 1, the number and form of the subjects are arbitrary, the connection relationship between the subjects is an example, and the subjects may not be connected or connected, and the connection may be any form, including direct connection or indirect connection, wired connection or wireless connection.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), and IEEE 802.20, ultra-wideband (UWB), Bluetooth (registered trademark), public land mobile network (PLMN) networks, device-to-device (D2D) systems, machine-to-machine (M2M) systems, Internet of Things (IoT) systems, vehicle-to-everything (V2X) systems, systems utilizing other communication methods, and next-generation systems built upon them and the like. Moreover, multiple systems may be combined (e.g., a combination of LTE or LTE-A with 5G) for application.

A method of AI-based positioning may include: a signal measurement node receives a positioning purpose reference signal, and measures the positioning purpose reference signal to obtain channel measurement data used for positioning, for example, a channel impulse response (CIR), and then inputs the channel measurement data used for the positioning into an AI model, such that the AI model outputs a required AI positioning result, or inputs the channel measurement data used for the positioning into the AI model, such that the AI model outputs an intermediate positioning parameter, for example, a time of arrival (ToA), an angle of arrival (AoA) and the like, and then obtains the required AI positioning result by performing calculation using a positioning method based on the intermediate positioning parameter. However, in some embodiments, the AI model may not be deployed at the signal measurement node, but may be deployed at the location server (e.g. an LMF). In this case, the signal measurement node typically needs to send the measured channel measurement data for the positioning to the location server, such that the location server inputs the received channel measurement data for the positioning into the AI model to obtain the required AI location result.

However, the channel measurement data used for the positioning has high dimensionality. Therefore, in a case where the first device sends the channel measurement data for the positioning to the third device, it results in significant transmission overhead, which is unfavorable for the practical application of AI-based positioning techniques in the real-world communication system. Moreover, complexity of the AI model is positively correlated with data dimensionality of the input data of the AI model. Therefore, in a case where the channel measurement data used as an input to the AI model has the high dimensionality, the complexity of the AI model is also large, resulting in large storage overhead and calculation overhead of the model.

FIG. 2A is an interaction diagram illustrating a reporting method according to an embodiment of the present disclosure. As shown in FIG. 2A, embodiments of the present disclosure relate to the reporting method. The method is applicable to a communication system 100, and includes the following steps.

**In step 2101,** at least one second device sends a positioning purpose reference signal to a first device.

In an implementation, the first device may be a channel data measurement node and the second device may be a reference signal sending node. In some embodiments, the first device may be a network device (e.g. a base station or a TRP) or a terminal, and the second device may also be the network device (e.g. the base station or the TRP) or the terminal. In a case where the first device is a network device, and the second device is a terminal, the positioning purpose reference signal may be an SRS-Pos. In a case where the first device is a terminal, and the second device is a network device, the positioning purpose reference signal may be a PRS.

**In step 2102,** the first device determines first information based on the positioning purpose reference signal.

In some embodiments, the first information may be used to implement an AI positioning, for example, the first information may be used to determine a required AI positioning result (e.g., a positioning location of the terminal). In an implementation, the first information may be, for example, a CIR. The CIR may refer to an influence exerted on a signal in a channel propagation process, and may reflect a change of the signal after the signal is subjected to the channel propagation, including attenuation of pulse signal energy caused by path loss and shadowing, as well as a superposition of multiple different pulses received sequentially at a receiver end due to presence of multiple propagation paths in the channel. The CIR is in a complex form.

In an implementation, the first device may determine the first information based on the positioning purpose reference signal received from the second device. In an implementation, a method for the first device to determine the first information based on the positioning purpose reference signal received from the second device may include: the first device determines a time domain sampling dimension N of the positioning purpose reference signal, where N is a positive integer, in which the time domain sampling dimension may be predefined by a protocol or may be configured by a network device, and then the first device may determine a time domain sampling position in the positioning purpose reference signal received by the first device based on the time domain sampling dimension N, and determine the above-mentioned first information based on data at each time domain sampling position. In an implementation, it is assumed that the first device receives a symbol sent by the second device, in which the symbol carries the positioning purpose reference signal and its waveform may be a superposition of multiple signal waveforms propagated via multi-path, if a duration of the symbol is T, in a case where the time domain sampling dimension is N, the first device may determine at least one time domain sampling position within the symbol according to a criterion that a time interval between two adjacent sampling positions is $\frac{T}{N}$. At each sampling position, the data includes amplitude and delay, and the first device may compute the aforementioned first information based on the data from the respective time domain sampling positions.

Therefore, in an implementation, the first information may include an M×N matrix, where M and N are both positive integers, in which M is a numerical count of the at least one second device sending the positioning purpose reference signal, and N is a time domain sampling dimension of the positioning purpose reference signal received by the first device, and an element at an $i^{th}$ row and a $j^{th}$ column of the M×N matrix is determined based on data at a $j^{th}$ time domain sampling position of a positioning purpose reference signal sent by an $i^{th}$ second device and received by the first device.

In some embodiments, in a case where the first information is the CIR, the element at the $i^{th}$ row and the $j^{th}$ column of the M×N matrix may be: the CIR determined based on the data at the $j^{th}$ time domain sampling position of the positioning purpose reference signal sent by the $i^{th}$

second device and received by the first device. Since the CIR is in the complex form, the amplitude and the delay in the data at the $j^{th}$ time domain sampling position of the positioning purpose reference signal sent by the $i^{th}$ second device may be converted into a complex form to obtain the element at the $i^{th}$ row and the $j^{th}$ column of the M×N matrix, such that the M×N matrix is a complex matrix and the data in the M×N matrix is complex data.

**In step 2103,** the first device performs a first processing on the first information to obtain second information.

In an implementation, the first processing may be used to perform a dimensionality reduction on the first information.

In some embodiments, the first processing may be a singular value decomposition, in which the singular value decomposition primarily decomposes a complex matrix into a product of three simpler sub-matrices with a lower dimension, which is specifically defined as: for a matrix A with a dimension of m×n, a unitary matrix U with a dimension of m×m, a first matrix $\Sigma$ with a dimension of m×n, and a unitary matrix V with a dimension of n×n are existed, such that A= $U\Sigma V^H$, where H represents a complex conjugate transpose; diagonal elements of the first matrix $\Sigma$ are singular values of the matrix A, are square roots of eigenvalues of $AA^T$, are arranged in a descending order, and correspond to important information implied in the matrix, in which the larger the data is, the more important the data is in the matrix data, and all other elements of the first matrix except the diagonal elements are 0. On the basis of this, in an implementation, a method for performing the singular value decomposition on the first information to obtain the second information may include: performing the singular value decomposition on the first information to obtain the unitary matrix U, the first matrix $\Sigma$ and the unitary matrix V corresponding to the first information, and determining the second information according to at least one of the unitary matrix U, the first matrix $\Sigma$, or the unitary matrix V.

In some embodiments, the method for determining the second information according to at least one of the unitary matrix U, the first matrix $\Sigma$, or the unitary matrix V may include: determining at least one of the unitary matrix U, the first matrix $\Sigma$, or the unitary matrix V as the second information. For example, the unitary matrix V may be determined as the second information, or the first matrix $\Sigma$ may be determined as the second information.

In some embodiments, the method for determining the second information according to at least one of the unitary matrix U, the first matrix $\Sigma$, or the unitary matrix V" may include: truncating part of data from at least one of the unitary matrix U, the first matrix $\Sigma$, or the unitary matrix V, and determining the data truncated from the at least one of the unitary matrix U, the first matrix $\Sigma$, or the unitary matrix V as the second information. In some embodiments, for example, the method for truncating part of data from the at least one of the unitary matrix U, the first matrix $\Sigma$, or the unitary matrix V may include: truncating first G pieces of data from the at least one of the unitary matrix U, the first matrix $\Sigma$, or the unitary matrix V, where G is a positive integer, and determining the first G pieces of data truncated from the at least one of the unitary matrix U, the first matrix $\Sigma$, or the unitary matrix V as the second information. For example, the first G pieces of data of the first matrix $\Sigma$ may be truncated, and the first G pieces of data truncated from the first matrix $\Sigma$ may be determined as the second information.

In some embodiments, the method for determining the second information according to at least one of the unitary matrix U, the first matrix $\Sigma$, or the unitary matrix V may include: respectively truncating part of data from the unitary matrix U, the first matrix $\Sigma$, and the unitary matrix V, and determining a product of the data truncated from the unitary matrix U, the data truncated from the first matrix $\Sigma$, and the data truncated from the unitary matrix V as the second information. Regarding the related description on truncating part of data from the unitary matrix U, the first matrix $\Sigma$, and the unitary matrix V, reference may be made to the preceding content.

In some other embodiments, the first processing may also be an eigenvalue decomposition, in which the eigenvalue decomposition primarily decomposes a matrix A as $A=Q\Sigma Q^{-1}$, where Q represents a matrix composed of eigenvectors of the matrix A, $\Sigma$ obtained by the eigenvalue decomposition is a diagonal matrix, diagonal elements are eigenvalues arranged in a descending order from large to small, and eigenvectors corresponding to the eigenvalues may describe main information about the matrix A. On the basis of this, in an implementation, the method for performing the eigenvalue decomposition on the first information to obtain the second information may include: performing the eigenvalue decomposition on the first information to obtain an eigenvector matrix Q and a second matrix $\Sigma$ corresponding to the first information; and determining at least one of the eigenvector matrix Q or the second matrix $\Sigma$ as the second information; and/or truncating part of data from the eigenvector matrix Q and/or the second matrix $\Sigma$, and determining the data truncated from the at least one of the eigenvector matrix Q or the second matrix $\Sigma$ as the second information. For example, the eigenvector matrix Q may be determined as the second information, and/or part of data may be truncated from the eigenvector matrix Q, and the data truncated from the eigenvector matrix Q may be determined as the second information. For the method for truncating the matrix, reference may be made to the related description content in the introduction of truncating the unitary matrix U, the first matrix $\Sigma$, and the unitary matrix V.

In some other embodiments, the first processing may be a principal component analysis (PCA), in which the PCA is a common data analysis method, and the PCA transforms original data into a set of linearly independent representations in respective dimensionality through a linear transformation, which is commonly used for the dimensionality reduction of high-dimensional data and may be used for extracting a main feature component of the data. In an implementation, a method for performing the PCA on the first information to obtain the second information may include: performing the PCA on the first information to obtain third information, and determining the third information as the second information; and/or truncating part of data from the third information, and determining the data truncated as the second information. The third information is also in the form of a matrix. Moreover, for the method for truncating the third information, reference may be made to the related description content in the above introduction of truncating the unitary matrix U, the first matrix Σ, and the unitary matrix V.

Therefore, it may be seen from the above-mentioned contents that a method for the first device to specifically perform the dimensionality reduction on the first information via the singular value decomposition, the eigenvalue decomposition and the PCA is provided to ensure that the first device may successfully perform the dimensionality reduction on the first information, thereby achieving the purpose of reducing the information transmission overhead, saving the transmission resources, saving the model storage overhead and calculation overhead, and improving the efficiency of AI positioning. Moreover, in a case where the singular value decomposition, the eigenvalue decomposition and the PCA are used to perform the dimensionality reduction on the first information, if the first device decomposes the first information according to the singular value decomposition or the eigenvalue decomposition to obtain sub-matrices, or analyzes the first information according to the PCA to obtain the third information, the first device further truncates the sub-matrices or the third information, and then obtains the second information according to the truncated data. Since algorithms of the singular value decomposition, the eigenvalue decomposition and PCA themselves may perform the dimensionality reduction on the first information, and on this basis, the sub-matrices or third information obtained by the singular value decomposition, the eigenvalue decomposition or the PCA is further truncated in the present disclosure, such that the data dimensionality may be greatly reduced, and thus the purpose of reducing the information transmission overhead, saving the transmission resources, saving the model storage overhead and calculation overhead, and improving the efficiency of AI positioning is greatly achieved. Furthermore, the singular value decomposition, the eigenvalue decomposition, and the PCA may not only implement the dimensionality reduction on the original data, but also retain key feature information of the original data when obtaining low-dimensional data. Therefore, in a case where the dimensionality reduction is performed on the first information to obtain the second information based on the singular value decomposition, the eigenvalue decomposition and/or the PCA, the second information obtained after the dimensionality reduction may be ensured to include a key feature of the original first information. Therefore, in a case where the first device subsequently reports based on the second information obtained through the dimensionality reduction to implement the AI positioning, it may not only save the cost and improve the efficiency of AI positioning, but also ensure the accuracy of AI positioning.

In still other embodiments, the first processing may be a truncation processing. In an implementation, a method for performing the truncation processing on the first information to obtain the second information includes at least one of the following truncations.

Data at first K time domain sampling positions is truncated from data at N time domain sampling positions corresponding to a reference signal sent by the second device to obtain the second information, where K is a positive integer, and K≤N. For example, first 64 pieces of data may be truncated from data at 256 time domain sampling positions.

K pieces of data are uniformly truncated from data at the N time domain sampling positions corresponding to the reference signal sent by the second device to obtain the second information. In an implementation, the uniform truncation may be understood, for example, as: uniformly dividing the data into F data subsets, in which each subset includes the same number of pieces of data, and the subsets may overlap or not overlap with each other; selecting B pieces of data from each subset, in which B is less than the total number of pieces of data in the subset. When selecting the B pieces of data from each subset, any B pieces of data may be selected, or B pieces of data with the highest power value may be selected, thereby achieving the uniform truncation. In an implementation, the power value may be a modulus of the complex data at the time domain sampling position. Furthermore, the uniform truncation may represent sampling of the original data, and data at one time domain sampling position is used to represent the data at its adjacent time domain sampling positions. In an implementation, for example, 64 pieces of data may be uniformly selected from data at 256 time domain sampling positions.

Top K pieces of data with the highest power value is truncated from data at the N time domain sampling positions corresponding to the reference signal sent by the second device to obtain the second information. For example, 64 pieces of data with the highest power value may be selected from the data at 256 time domain sampling positions.

For a detailed description of the truncation processing described above, reference may be made to the foregoing descriptions.

In an implementation, the principle for truncating the data at the first K time domain sampling positions from the data at the N time domain sampling positions corresponding to the reference signal sent by the second device to obtain the second information is introduced as follows: in a time domain dimension, a signal located at an earlier time domain position of the positioning purpose reference signal received by the first device is generally a signal with a shorter propagation path, in which when the propagation path is short, a required propagation duration is short, and the signal may arrive at the first device earlier, i.e., the time domain position at which the signal is received by the first device is located ahead. The signal with the shorter propagation path will experience less reflection and/or refraction and will have less loss, and thus a value of the first information (such as the CIR) obtained on the basis of the signal with the shorter propagation path (i.e., a real part value of the complex data, an imaginary part value of the complex data, or the modulus of the complex data) will be larger. That is, a value of the first information corresponding to the reference signal which is located earlier in the time domain will be larger. On the basis of this, in some embodiments, in the time domain sampling dimension, non-zero data is usually concentrated in front sampling point positions of the first information, while near-zero data is usually concentrated in end sampling point positions of the first information. In other words, a value of the first information corresponding to an earlier sampling position in the first information is larger, and a value of the first information corresponding to a later sampling position is closer to zero. The larger the value of the data in the first information is, it will play a more important role in subsequent AI positioning. Therefore, in a case where the first information is truncated to perform the dimensionality reduction, the non-zero data at the first K time domain sample positions may be firstly considered, thereby not only achieving the purpose of dimensionality reduction, but also truncation of the key data. Therefore, in a case where the AI positioning is subsequently performed based on the truncated second information, the positioning accuracy may be ensured.

In an implementation, the principle for truncating the top K pieces of data with the highest power value from the data at the N time domain sampling positions corresponding to the reference signal sent by the second device to obtain the second information is introduced as follows: since the data with the higher power value in the first information play a more important role in subsequent AI positioning, truncating the top K pieces of data with the highest power value not only achieves the goal of dimensionality reduction, but also truncation of the key information. Therefore, in a case where the AI positioning is subsequently performed based on the truncated second information, the positioning accuracy may be ensured.

Therefore, it may be seen from the above-mentioned contents that the method for the first device to specifically perform the dimensionality reduction on the first information through the truncation processing is provided to ensure that the first device may successfully perform the dimensionality reduction on the first information, thereby achieving the purpose of reducing the information transmission overhead, saving the transmission resources, saving the model storage overhead and calculation overhead, and improving the efficiency of AI positioning. Moreover, in a case where the above-mentioned truncation processing is used to truncate the data at the first K time domain sampling positions from the data at the N time domain sampling positions corresponding to the reference signal sent by the second device, or truncate the top K pieces of data with the highest power value from the data at the N time domain sampling positions corresponding to the reference signal sent by the second device, it may be ensured that the data with the higher power value in the first information is truncated as the second information, thereby ensuring that the key feature of the original first information may be retained in the second information. Moreover, in a case where the above-mentioned truncation processing uniformly truncates the K pieces of data from the data at the N time domain sampling positions corresponding to the reference signal sent by the second device, a distribution feature of the truncated data may be made close to a distribution feature of the data in the first information, thereby making the second information retain the distribution feature of the data in the original first information. That is, in a case where the truncation processing is used to perform the dimensionality reduction on the first information, the distribution feature of the data in the first information is not destroyed and the key data in the first information is not omitted. Therefore, in a case where the first device subsequently reports based on the second information obtained through the dimensionality reduction to implement the AI positioning, it may not only save the cost and improve the efficiency of AI positioning, but also ensure the accuracy of AI positioning.

In step 2104, the first device reports to a third device based on the second information.

In some embodiments, the first device may report the second information to the third device, and/or the first device may report a power value of the data in the second information to the third device.

In an implementation, the third device may be an LMF.

**In step 2105,** the third device performs the AI positioning based on the report sent by the first device.

In an implementation, an AI model may be deployed on the third device, and the AI model may be used to implement the AI positioning. After receiving the report sent by the first device, the third device may input information (such as the second information and/or the power value of the data in the second information) reported by the first device into the AI model to obtain the required AI positioning result. In an implementation, the third device may input the information reported by the first device into the AI model, such that the AI model directly outputs the required AI positioning result; or the third device may input the information reported by the first device into the AI model, such that the AI model outputs an intermediate positioning parameter, such as a ToA, an AoA, and the like, and then calculates the required AI positioning result based on the intermediate parameter using a positioning algorithm.

In the above-described embodiments, after the first device determines the first information for implementing the AI positioning based on the positioning purpose reference signal, instead of directly reporting the original first information to the third device to implement the AI positioning, the first device performs the first processing on the first information to obtain the second information by performing the dimensionality reduction on the first information, and then reports to the third device based on the second information, such that the third device inputs the received information reported by the first device into the AI model deployed on the third device to implement the AI positioning. Therefore, in embodiments of the present disclosure, the information reported by the first device for the AI positioning to the third device is reported based on the information obtained after the dimensionality reduction, such that the dimensionality of the information for AI positioning reported by the first device to the third device is smaller, thereby reducing the information transmission overhead and saving the transmission resources. Moreover, the dimensionality of the information for the AI positioning received by the third device is smaller, such that the data dimensionality of the input data of the AI model is smaller. Since the complexity of the AI model is positively correlated with the data dimensionality of the input data of the AI model, the complexity of the AI model is reduced due to the smaller data dimensionality of the input data, thereby saving the model storage overhead and the calculation overhead, and improving the efficiency of AI positioning.

The reporting method according to embodiments of the present disclosure may include at least one of step S2101 to step S2105. For example, step S2101 may be implemented as an independent embodiment, step S2102 may be implemented as an independent embodiment, step S2103 may be implemented as an independent embodiment, and step S2101 combined with step S2102 may be implemented as an independent embodiment, but are not limited to this.

In the present implementation or embodiment, provided that there is no conflict, the various steps may be performed independently, combined in any manner, or executed in any order. Optional methods or optional examples may be combined arbitrarily, and may also be arbitrarily combined with any steps from other implementations or embodiments.

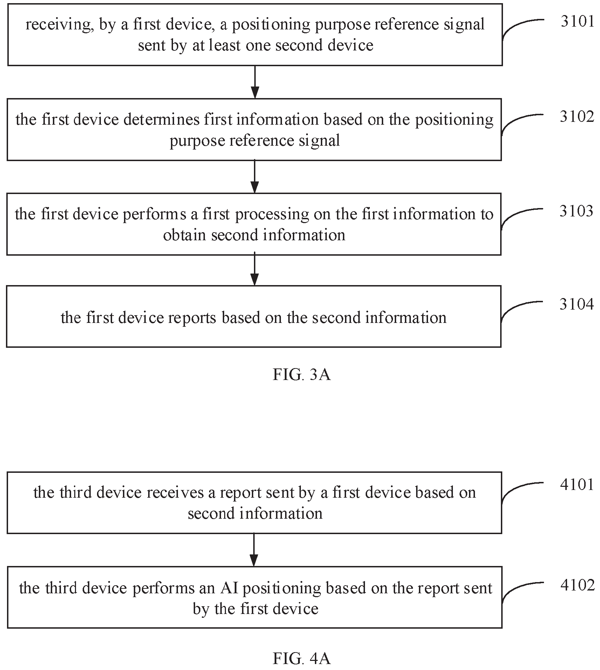

FIG. 3A is an interaction diagram illustrating a reporting method according to an embodiment of the present disclosure. As shown in FIG. 3A, embodiments of the present disclosure relate to a reporting method. The method is performed by a first device, and includes the following steps.

**In step 3101,** the first device receives a positioning purpose reference signal sent by at least one second device.

**In step 3102,** the first device determines first information based on the positioning purpose reference signal.

**In step 3103,** the first device performs a first processing on the first information to obtain second information.

**In step 3104,** the first device reports based on the second information.

In an implementation, the first processing is used to perform a dimensionality reduction on the first information.

In an implementation, performing the first processing on the first information to obtain the second information includes at least one of:

performing a singular value decomposition on the first information to obtain the second information;
performing an eigenvalue decomposition on the first information to obtain the second information;
performing a PCA on the first information to obtain the second information; or
performing a truncation processing on the first information to obtain the second information.

In an implementation, the first information includes an M×N matrix, where M and N are both positive integers, in which M is a numerical count of the at least one second device sending the positioning purpose reference signal, and N is a time domain sampling dimension of the positioning purpose reference signal received by the first device, and an element at an $i^{th}$ row and a $j^{th}$ column of the M×N matrix is determined based on data at a $j^{th}$ time domain sampling position of a positioning purpose reference signal sent by an $i^{th}$ second device and received by the first device.

In an implementation, performing the singular value decomposition on the first information to obtain the second information includes:

performing the singular value decomposition on the first information to obtain a unitary matrix U, a first matrix Σ and a unitary matrix V corresponding to the first information; and
determining the second information according to at least one of the unitary matrix U, the first matrix Σ, or the unitary matrix V.

In an implementation, determining the second information according to at least one of the unitary matrix U, the first matrix Σ, or the unitary matrix V includes at least one of:

determining at least one of the unitary matrix U, the first matrix Σ, or the unitary matrix V as the second information;
truncating part of data from at least one of the unitary matrix U, the first matrix Σ, or the unitary matrix V, and determining the data truncated from the at least one of the unitary matrix U, the first matrix Σ, or the unitary matrix V as the second information; or
respectively truncating part of data from the unitary matrix U, the first matrix Σ, and the unitary matrix V, and determining a product of the data truncated from the unitary matrix U, the data truncated from the first matrix Σ, and the data truncated from the unitary matrix V as the second information.

In an implementation, performing the eigenvalue decomposition on the first information to obtain the second information includes:

performing the eigenvalue decomposition on the first information to obtain an eigenvector matrix Q and a second matrix Σ corresponding to the first information; and
determining at least one of the eigenvector matrix Q or the second matrix Σ as the second information; and/or truncating part of data from the eigenvector matrix Q and/or the second matrix Σ, and determining the data truncated from the at least one of the eigenvector matrix Q or the second matrix Σ as the second information.

In an implementation, performing the PCA on the first information to obtain the second information includes:
performing the PCA on the first information to obtain third information, and determining the third information as the second information; and/or truncating part of data from the third information, and determining the data truncated as the second information.

In an implementation, performing the truncation processing on the first information to obtain the second information includes at least one of:

truncating data at first K time domain sampling positions from data at N time domain sampling positions corresponding to a reference signal sent by the second device to obtain the second information;
uniformly truncating K pieces of data from data at N time domain sampling positions corresponding to a reference signal sent by the second device to obtain the second information; or
truncating top K pieces of data with a highest power value from data at N time domain sampling positions corresponding to a reference signal sent by the second device to obtain the second information,
in which K is a positive integer, and K≤N.

In an implementation, the first information includes a channel impulse response (CIR), and the M×N matrix is a complex matrix, and data in the M×N matrix is complex data; and
data in the second information is complex data.

In an implementation, reporting to the third device based on the second information includes at least one of:

reporting the second information to the third device; or

reporting a power value of the data in the second information to the third device.

In an implementation, the power value is a modulus of the complex data in the second information.
In an implementation, the first device is a terminal, the second device is a base station, and the positioning purpose reference signal is a PRS; or
the first device is a base station, the second device is a terminal, and the positioning purpose reference signal is an SRS-Pos.
In an implementation, the third device is an LMF.
Regarding a detailed description of steps 3101 to 3104, reference may be made to the above-described embodiments.
The reporting method according to embodiments of the present disclosure may include at least one of step S3101 to step S3104. For example, step S3101 may be implemented as an independent embodiment, step S3102 may be implemented as an independent embodiment, and step S3101 combined with step S3102 may be implemented as an independent embodiment, which is not limited in the present disclosure.
In the present implementation or embodiment, provided that there is no conflict, the various steps may be performed independently, combined in any manner, or executed in any order. Optional methods or optional examples may be combined arbitrarily, and may also be arbitrarily combined with any steps from other implementations or embodiments.
FIG. 4A is an interaction diagram illustrating a reporting method according to an embodiment of the present disclosure. As shown in FIG. 4A, embodiments of the present disclosure relate to a reporting method. The method is performed by a third device, and includes the following steps.
In step 4101, the third device receives a report sent by a first device based on second information.
In step 4102, the third device performs an AI positioning based on the report sent by the first device.
In an implementation, the second information is obtained by performing a first processing to first information, the first processing is used to perform a dimensionality reduction on the first information, the first information is used to implement the AI positioning, the first information is determined according to a positioning purpose reference signal, and the positioning purpose reference signal is sent to the first device by at least one second device.
In an implementation, the first information includes an M×N matrix, where M and N are both positive integers, in which M is a numerical count of the at least one second device sending the positioning purpose reference signal, and N is a time domain sampling dimension of the positioning purpose reference signal received by the first device, and an element at an $i^{th}$ row and a $j^{th}$ column of the M×N matrix is determined based on data at a $j^{th}$ time domain sampling position of a positioning purpose reference signal sent by an $i^{th}$ second device and received by the first device.

In an implementation, receiving the report sent by the first device based on the second information includes at least one of:

receiving the second information reported by the first device; or
receiving a power value of data in the second information reported by the first device.

In an implementation, performing the AI positioning based on the report sent by the first device includes:
obtaining an AI positioning result by inputting information reported by the first device into an AI model.

Regarding a detailed description of steps 4101 to 4102, reference may be made to the above-described embodiments.

The reporting method according to embodiments of the present disclosure may include at least one of step S4101 to step S4102. For example, step S4101 may be implemented as an independent embodiment, and step S4102 may be implemented as an independent embodiment, which is not limited in the present disclosure.

In the present implementation or embodiment, provided that there is no conflict, the various steps may be performed independently, combined in any manner, or executed in any order. Optional methods or optional examples may be combined arbitrarily, and may also be arbitrarily combined with any steps from other implementations or embodiments.

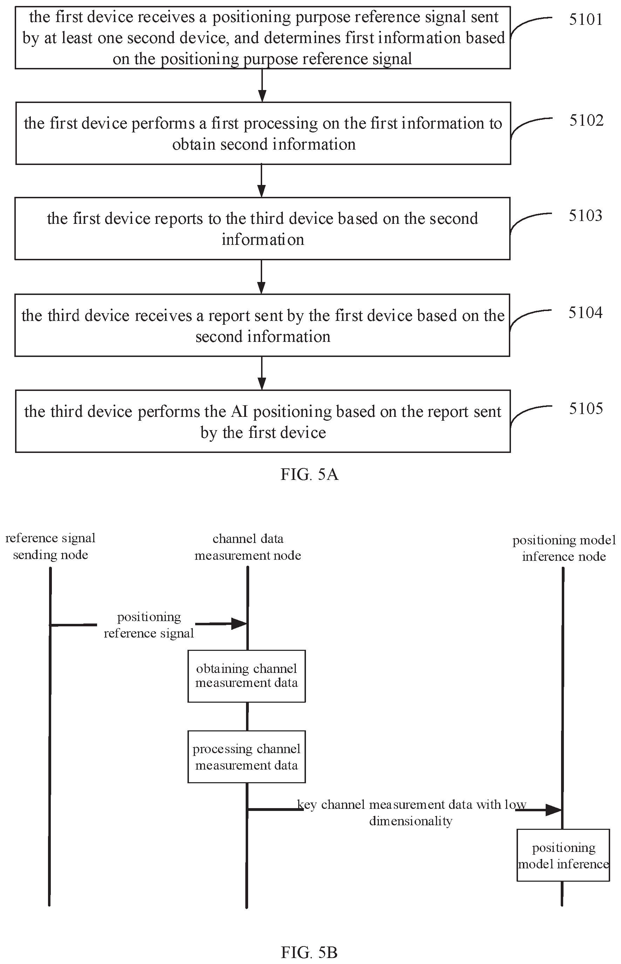

FIG. 5A is an interaction diagram illustrating a reporting method according to an embodiment of the present disclosure. As shown in FIG. 5A, embodiments of the present disclosure relate to a reporting method. The method is performed by a communication system including a first device and a third device, and includes the following steps.

**In step 5101,** the first device receives a positioning purpose reference signal sent by at least one second device, and determines first information based on the positioning purpose reference signal.

**In step 5102,** the first device performs a first processing on the first information to obtain second information.

**In step 5103,** the first device reports to the third device based on the second information.

**In step 5104,** the third device receives a report sent by the first device based on the second information.

**In step 5105,** the third device performs the AI positioning based on the report sent by the first device.

Regarding implementations of steps 5101 to 5105, reference may be made to the above-described embodiments.

In some embodiments, the method described above may include the methods described above for embodiments of the communication system, the first device, the third device and the like, which will not be repeated here.

The reporting method according to embodiments of the present disclosure may include at least one of step S5101 to step S5105. For example, step S5101 may be implemented as an independent embodiment, and step S5102 may be implemented as an independent embodiment, which is not limited in the present disclosure.

In the present implementation or embodiment, provided that there is no conflict, the various steps may be performed independently, combined in any manner, or executed in any order. Optional methods or optional examples may be combined arbitrarily, and may also be arbitrarily combined with any steps from other implementations or embodiments.

The following is an exemplary description of the above-described methods.

An application scenario of the technical solution of the present disclosure

Regarding an application scenario where a positioning of a terminal is completed based on an AI model, the AI model for positioning is deployed in an LMF, and a UE or a BS calculates and obtains channel measurement data based on a reference signal and reports the channel measurement data to the LMF, and then inputs the channel measurement data into an AI positioning model to obtain a positioning result.

A technical problem to be solved by the technical solution of the present disclosure

The UE or BS needs to report the channel measurement data used for AI positioning to the LMF, but directly reporting original channel measurement data, such as a CIR, will result in the large data reporting overhead. On the premise of ensuring the positioning accuracy, the channel measurement data is processed to reduce its data dimension, which may reduce the positioning data transmission overhead and the AI positioning model complexity, and is beneficial to promote the practical application of AI-based terminal positioning technology in the communication system.

Entire contents of the technical solution of the present disclosure

A data dimension of a complete CIR is high, but data of the CIR has some distribution characteristics. In a time domain sampling point dimension, non-zero data is usually concentrated in front sampling point positions, which represents the propagation path information of higher power signals received by the receiving end, and near-zero data is usually concentrated in end sampling point positions, where the CIR value is close to 0. In general, data with a larger value in the CIR plays a more important role in the positioning. Therefore, it may be considered to first process the data in the CIR in the time domain sampling point dimension to reduce an amount of data, and then report the processed channel measurement data to the LMF, and input the data into the AI model to complete the positioning of the terminal. The CIR is a complex matrix.

Some methods for directly performing a dimensionality reduction on the data may be considered in a case of processing the data in the CIR in the time domain sampling point dimension. It is assumed that an original dimension of the time domain sampling point of the data in the CIR is N, data processing methods that may be adopted include:

(1) truncating first M pieces of data as an input of the AI positioning model, where M<N, for example, selecting first 64 pieces of data from 256 time domain sampling points, which indicates mainly selecting the non-zero data in the original CIR to complete the positioning;

(2) uniformly selecting K pieces of data, where K<N, for example, uniformly selecting 64 pieces of data from 256 time domain sampling points, which indicates sampling original data, and using data at a sampling point to represent data at adjacent sampling points;

(3) first calculating a power value of data at each time domain sampling point, i.e., a modulus of complex data of each sampling point, and then selecting P pieces of data with the highest power value, where P<N, for example, selecting top 64 pieces of data with the highest power value from 256 time domain sampling points, which represents that the positioning is completed based on receiving paths with the strongest power.

The above-mentioned processing method directly selects or samples the data in the original CIR, and does not involve transformation of the data itself. In a process of data selection or sampling, it may cause the loss of key data which plays a major role in the positioning, and then affect the positioning accuracy. A singular value decomposition, an eigenvalue decomposition, a principal component analysis and other data analysis and dimensionality reduction methods may achieve the dimensionality reduction on the original data, and may retain the key feature information in the low-dimensional data obtained, which is a more appropriate method for processing the data in the original CIR.

Therefore, the solution proposes an AI positioning method with low data transmission overhead. On the basis of the existing AI-based terminal positioning solution, it is introduced a method for processing the channel measurement data that primarily achieves extracting the key information from the data in the original CIR and obtaining the key channel measurement data with low dimensionality as an input to the AI positioning model, thereby reducing the overhead incurred when the UE or BS reports the channel measurement data to the LMF.

FIG. 5B is an interaction diagram illustrating a reporting method according to an embodiment of the present disclosure. As shown in FIG. 5B, the procedural steps of the solution are as follows.

(1) A reference signal sending node sends a positioning reference signal to a channel data measurement node. In a case where the reference signal sending node is a BS, the positioning reference signal is a PRS, and the channel data measurement node is a UE; in a case where the reference signal sending node is a UE, the positioning reference signal is a SRS-Pos, and the channel data measurement node is a BS.

(2) The channel data measurement node receives the positioning reference signal, calculates and obtains complete data in the CIR.

(3) The channel data measurement node uses a data analysis and dimensionality reduction method to process the original CIR measurement data in the time domain sampling point dimension to obtain key channel measurement data with low dimensionality. The method may include: the singular value decomposition, the eigenvalue decomposition, the PCA and the like.

(4) The channel data measurement node reports the key channel measurement data with low dimensionality to the LMF.

(5) The LMF receives the key channel measurement data with low dimensionality, inputs the key channel measurement data with low dimensionality to the AI positioning model, and obtains the positioning result, i.e., position coordinates of the terminal.

In the above-mentioned procedure, the channel data measurement node is required to report the key channel measurement data with low dimensionality to a positioning model inference node. In the information reported by the measurement node UE or BS to the model inference node LMF, new measurement values are defined:

nr-KeyInformation
nr-RSRP-KeyInformation
in which nr-DL-KeyInformation represents the key channel measurement data with low dimensionality obtained by the channel data measurement node after processing the data in the original CIR, and nr-DL-RSRP-KeyInformation represents a power value of the key channel measurement data with low dimensionality, i.e., a modulus of a complex value at each position in the nr-DL-KeyInformation. Since the power value may achieve an effect similar to that of the original complex data, either of the power value or the complex data may be selected for reporting in practical applications of the solution.

In an implementation, the present disclosure is directed to an application scenario in which the terminal positioning is performed based on the AI model, and for an application mode in which the LMF receives the channel measurement data reported by the UE or BS and inputs the AI positioning model to obtain position coordinates of the terminal. In order to solve the problem of large reporting overhead of channel measurement data for the positioning, the present disclosure proposes an AI positioning method with low data transmission overhead. After obtaining the channel measurement data, the UE or the BS completes data analysis and dimensionality reduction processing, and reports the processed low-dimensional key channel measurement data, which may effectively reduce the reporting overhead of the channel measurement data for the positioning and AI model complexity on the premise of ensuring positioning accuracy, and is beneficial to promote the application of the AI positioning solution in the actual communication system.

Embodiments of the present disclosure also provide a device for implementing any of the above methods, for example, a device including units or modules for implementing the steps performed by the terminal in any of the above methods. For another example, another device is also provided, which includes units or modules for implementing the steps performed by the network device (such as an access network device, a core network function node, a core network device and the like) in any of the above methods.

It should be understood that the division of each unit or module in the above apparatus is only a division of logical functions, which may be fully or partially integrated into a physical entity or physically separated in actual implementation. Moreover, the units or modules in the apparatus may be implemented in the form of calling software by a processor: for example, the apparatus includes a processor, which is connected with a memory, and instructions are stored in the memory, and the processor calls the instructions stored in the memory to implement any of the above methods or implement the functions of the units or modules of the apparatus, in which the processor is a general-purpose processor, such as a central processing unit (CPU) or a microprocessor, and the memory is a memory in the apparatus or a memory outside the apparatus. Alternatively, the units or modules in the apparatus may be implemented in the form of hardware circuits, and some or all of the functions of the units or modules may be implemented by designing the hardware circuits, which may be understood as one or more processors; for example, in an implementation, the above-mentioned hardware circuit is an application-specific integrated circuit (ASIC), and some or all of the functions of the above-mentioned units or modules are implemented by designing the logical relationship of elements in the circuit; for another example, in another implementation, the above hardware circuit may be implemented by a programmable logic device (PLD). Take a field programmable gate array (FPGA) as an example, it may include a large number of logic gates, and the connection relationship between the logic gates is configured by configuration files, implementing the functions of some or all of the above units or modules. All the units or modules of the above apparatus may be implemented entirely in the form of calling software by the processor, or entirely in the form of hardware circuits, or partially in the form of calling software by a processor, and the rest is implemented in the form of hardware circuits.

In embodiments of the present disclosure, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP). In another implementation, the processor may realize certain functions through the logical relationship of hardware circuits, which are fixed or reconfigurable. For example, the processor is a hardware circuit implemented by an application-specific integrated circuit (ASIC) or a programmable logic device (PLD), such as an FPGA. In the reconfigurable hardware circuit, the process that the processor loads the configuration document to implement the hardware circuit configuration may be understood as the process that the processor loads instructions to implement the functions of some or all of the above units or modules. Furthermore, it may also be a hardware circuit designed for artificial intelligence, which may be understood as the ASIC, such as neural network processing unit (NPU), tensor processing unit (TPU), deep learning processing unit (DPU) and so on.

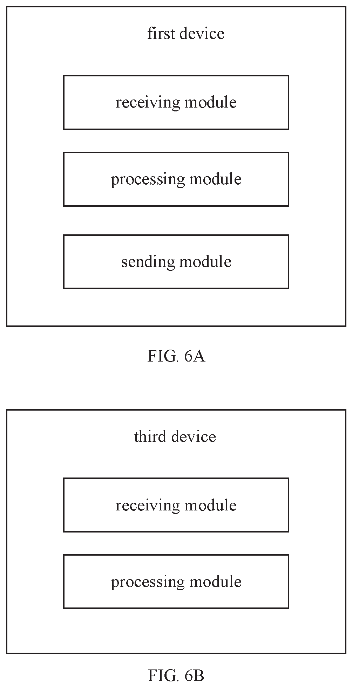

FIG. 6A is a block diagram illustrating a first device provided in an embodiment of the present disclosure. As shown in FIG. 6A, the first device includes:

> a receiving module, configured to receive a positioning purpose reference signal sent by at least one second device, and to determine first information based on the positioning purpose reference signal, in which the first information is used to implement an AI positioning;
> a processing module, configured to perform a first processing on the first information to obtain second information, in which the first processing is used to perform a dimensionality reduction on the first information; and
> a sending module, configured to report to a third device based on the second information.

In an implementation, the processing module is configured to perform the steps associated with "processing" performed by the first device in any of the above methods, the sending module is configured to perform the steps associated with "sending" performed by the first device in any of the above methods, and the receiving module is configured to perform the steps associated with "receiving" performed by the first device in any of the above methods, which will not be repeated here.

In an implementation, the processing module includes at least one of:

a first decomposing unit, configured to perform a singular value decomposition on the first information to obtain the second information;

a second decomposing unit, configured to perform an eigenvalue decomposition on the first information to obtain the second information;

an analysis unit, configured to perform a PCA on the first information to obtain the second information; or

a truncating unit, configured to perform a truncation processing on the first information to obtain the second information.

In an implementation, the first information includes an M×N matrix, where M and N are both positive integers, in which M is a numerical count of the at least one second device sending the positioning purpose reference signal, and N is a time domain sampling dimension of the positioning purpose reference signal received by the first device, and an element at an $i^{th}$ row and a $j^{th}$ column of the M×N matrix is determined based on data at a $j^{th}$ time domain sampling position of a positioning purpose reference signal sent by an $i^{th}$ second device and received by the first device.

In an implementation, the first decomposing unit is further configured to:

perform the singular value decomposition on the first information to obtain a unitary matrix U, a first matrix $\Sigma$ and a unitary matrix V corresponding to the first information; and

determine the second information according to at least one of the unitary matrix U, the first matrix $\Sigma$, or the unitary matrix V.

In an implementation, the first decomposing unit is further configured to perform at least one of:

determining at least one of the unitary matrix U, the first matrix $\Sigma$, or the unitary matrix V as the second information;

truncating part of data from at least one of the unitary matrix U, the first matrix $\Sigma$, or the unitary matrix V, and determining the data truncated from the at least one of the unitary matrix U, the first matrix $\Sigma$, or the unitary matrix V as the second information; or

respectively truncating part of data from the unitary matrix U, the first matrix $\Sigma$, and the unitary matrix V, and determining a product of the data truncated from the unitary matrix U, the data truncated from the first matrix $\Sigma$, and the data truncated from the unitary matrix V as the second information.

In an implementation, the second decomposing unit is further configured to:

perform the eigenvalue decomposition on the first information to obtain an eigenvector matrix Q and a second matrix $\Sigma$ corresponding to the first information; and

determine at least one of the eigenvector matrix Q or

the second matrix $\Sigma$ as the second information; and/or truncate part of data from the eigenvector matrix Q and/or the second matrix $\Sigma$, and determine the data truncated from the at least one of the eigenvector matrix Q or the second matrix $\Sigma$ as the second information.

In an implementation, the analysis unit is further configured to:

perform the PCA on the first information to obtain third information, and determining the third information as the second information; and/or truncate part of data from the third information, and determine the data truncated as the second information.

In an implementation, the truncating unit is configured to:

truncate data at first K time domain sampling positions from data at N time domain sampling positions corresponding to a reference signal sent by the second device to obtain the second information;

uniformly truncate K pieces of data from data at N time domain sampling positions corresponding to a reference signal sent by the second device to obtain the second information; or

truncate top K pieces of data with a highest power value from data at N time domain sampling positions corresponding to a reference signal sent by the second device to obtain the second information,

in which K is a positive integer, and K≤N.

In an implementation, the first information includes a CIR, and the M×N matrix is a complex matrix, and data in the M×N matrix is complex data; and data in the second information is complex data.

In an implementation, the sending module further includes at least one of:

a first sending unit, configured to report the second information to the third device; or

a second sending unit, configured to report a power value of the data in the second information to the third device.

In an implementation, the power value is a modulus of the complex data in the second information.

In an implementation, the first device is a terminal, the second device is a base station, and the positioning purpose reference signal is a PRS; or the first device is a base station, the second device is a terminal, and the positioning purpose reference signal is an SRS-Pos.

In an implementation, the third device is an LMF.

FIG. 6B is a block diagram illustrating a third device provided in an embodiment of the present disclosure. As shown in FIG. 6B, the third device includes:

a receiving module, configured to receive a report sent by a first device based on second information, in which the second information is obtained by performing a first processing to first information, the first processing is used to perform a dimensionality reduction on the first information, the first information is used to implement an AI positioning, the first information is determined according to a positioning purpose reference signal, and the positioning purpose reference signal is sent to the first device by at least one second device; and

a processing module, configured to perform the AI positioning based on the report sent by the first device.

In an implementation, the processing module is configured to perform the steps associated with "processing" performed by the third device in any of the above methods, and the receiving module is configured to perform the steps associated with "receiving" performed by the third device in any of the above methods. The third device may further include the sending module, in which the sending module is configured to perform the steps associated with "sending" performed by the first device in any of the above methods.

In an implementation, the first information includes an M×N matrix, where M and N are both positive integers, in which M is a numerical count of the at least one second device sending the positioning purpose reference signal, and N is a time domain sampling dimension of the positioning purpose reference signal received by the first device, and an element at an $i^{th}$ row and a $j^{th}$ column of the M×N matrix is determined based on data at a $j^{th}$ time domain sampling position of a positioning purpose reference signal sent by an $i^{th}$ second device and received by the first device.

In an implementation, the receiving module further includes at least one of:

a first receiving unit, configured to receive the second information reported by the first device; or
a second receiving unit, configured to receive a power value of data in the second information reported by the first device.

In an implementation, the processing module includes:

an inputting unit, configured to obtain an AI positioning result by inputting information reported by the first device into an AI model.

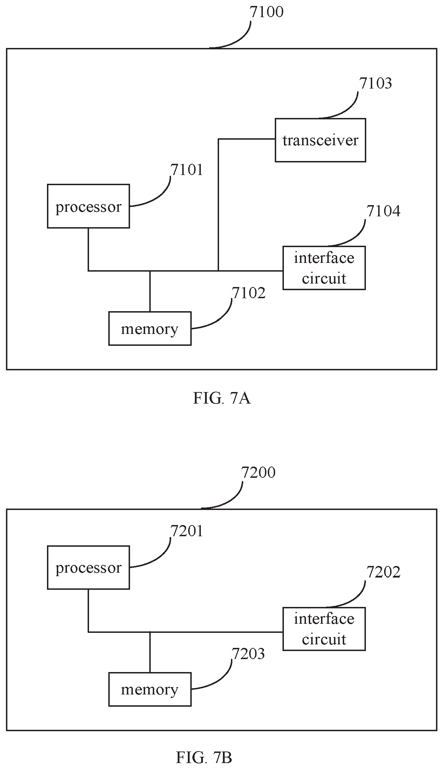

FIG. 7A is a block diagram illustrating a communication device provided in an embodiment of the present disclosure. The communication device 7100 may be a network device (e.g., an access network device, a core network device, etc.), or may be a terminal (e.g., a user equipment, etc.), or may be a chip, a chip system, or a processor supporting the network device to implement any of the above methods, or may be a chip, a chip system, or a processor supporting the terminal to implement any of the above methods. The communication device 7100 may be used to implement the method described in the above-mentioned method embodiments, for details, reference may be made to the description in the above-mentioned method embodiments.

As shown in FIG. 7A, the communication device 7100 includes one or more processors 7101. The processor 7101 may be a general-purpose processor or a special-purpose processor, for example, a baseband processor or a central processing unit. The baseband processor may be used to process communication protocols and communication data, and the central processor may be used to control communication devices (such as a base station, a baseband chip, a terminal, a terminal chips, a DU or a CU, etc.), execute programs, and process program data. The processors 7101 are configured to invoke instructions to cause the communication device 7100 to perform any of the above methods.

In some embodiments, the communication device 7100 further includes one or more memories 7102 for storing instructions. In an implementation, all or part of the memory 7102 may be located outside the communication device 7100.

In some embodiments, the communication device 7100 further includes one or more transceivers 7103. In a case where the communication device 7100 includes one or more transceivers 7103, the transceiver 7103 performs at least one of the communication steps such as sending and/or receiving in the above method, and the processor 7101 performs other steps.

In an optional embodiment, the transceiver may include a receiver and/or a transmitter, which may be separate or integrated. In an implementation, the terms such as transceiver, transceiver unit, transceiving machine, transceiver circuit, etc. may be replaced with each other, and the terms such as transmitter, transmitting unit, transmitting machine, transmitting circuit and the like may be replaced with each other, and the terms such as receiver, receiving unit, receiving machine, receiving circuit and the like may be replaced with each other.

In an implementation, the communication device 7100 further includes one or more interface circuits 7104. The interface circuit 7104 may be used to receive signals from the memory 7102 or other devices, and may be used to send signals to the memory 7102 or other devices. For example, the interface circuit 7104 may read an instruction stored in the memory 7102 and send the instruction to the processor 7101.

The communication device 7100 described in the above embodiments may be a network device or a terminal, but the scope of the communication device 7100 described in the present disclosure is not limited to this. The structure of the communication device 7100 may not be limited by FIG. 7A. The communication device may be a stand-alone device or may be part of a larger device. For example, the communication device may be: 1) a stand-alone integrated circuit (IC), or a chip, or a chip system or subsystem; 2) a set of one or more ICs, in which optionally, the set of ICs may also include a storage component for storing data and programs; 3) an ASIC, such as a modem; 4) a module that may be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others.

FIG. 7B is a block diagram illustrating a chip 7200 according to embodiments of the present disclosure. In a case where the communication device 7100 may be a chip or a chip system, please refer to the block diagram of the chip 7200 shown in FIG. 7B, but it is not limited to this.

The chip 7200 includes one or more processors 7201, and the processor 7201 is configured to invoke instructions to cause the chip 7200 to perform any of the above methods.

In some embodiments, the chip 7200 also includes one or more interface circuits 7202. In an implementation, the interface circuit 7202 is connected to the memory 7203. The interface circuit 7202 may be used to receive signals from the memory 7203 or other devices, and the interface circuit 7202 may be used to send signals to the memory 7203 or other devices. For example, the interface circuit 7202 may read an instruction stored in the memory 7203 and send the instruction to the processor 7201. In an implementation, terms such as interface circuit, interface, transceiver pin, transceiver and the like may be replaced with each other.

In some embodiments, the chip 7200 further includes one or more memories 7203 for storing instructions. In an implementation, all or part of the memory 7203 may be outside the chip 7200.

The present disclosure further proposes a storage medium on which instructions are stored, which, when executed on the communication device 7100, cause the communication device 7100 to perform any of the above methods. In an implementation, the storage medium is an electronic storage medium. In an implementation, the storage medium is a computer-readable storage medium, but it is not limited to this, and it may also be a storage medium readable by other devices. In an implementation, the storage medium may be a non-transitory storage medium, but it is not limited to this, and it may also be a transitory storage medium.

The present disclosure further proposes a program product which, when executed by the communication device 7100, causes the communication device 7100 to perform any of the above methods. In an implementation, the program product is a computer program product.

The present disclosure further proposes a computer program that, when run on a computer, causes the computer to perform any of the above methods.

All or some of the above embodiments may be implemented by software, hardware, firmware or any combination thereof. When implemented using software, all or some of the above embodiments may be implemented in the form of the computer program product. The computer program product includes one or more computer programs. When the computer program is loaded and executed on the computer, all or some of the processes or functions according to embodiments of the present disclosure will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (for example, in an infrared, wireless, or microwave manner, or the like). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), a semiconductor medium (for example, a solid state disk (SSD)), or the like.

Those skilled in the art may realize that the units and algorithmic steps of the various examples described in combination with embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, for the specific working processes of the systems, apparatuses, and units described above reference can be made to the corresponding processes in the preceding method embodiments, and details will not be repeated herein.

The above are only specific implementations of the disclosure, but the scope of protection of the present disclosure is not limited thereto. Those skilled in the art familiar to this technical field can easily think of changes or substitutions in the technical scope disclosed by the present disclosure, which shall be covered by the scope of protection of the present disclosure. Therefore, the scope of protection of the present disclosure shall be governed by the scope of protection of the appended claims.

## Claims

1. A reporting method, comprising:

    receiving, by a first device, a positioning purpose reference signal sent by at least one second device, and determining first information based on the positioning purpose reference signal, wherein the first information is used to implement an artificial intelligence (AI) positioning;
    performing, by the first device, a first processing on the first information to obtain second information, wherein the first processing is used to perform a dimensionality reduction on the first information; and
    reporting, by the first device, to a third device based on the second information.

2. The method according to claim 1, wherein performing the first processing on the first information to obtain the second information comprises at least one of:

    performing a singular value decomposition on the first information to obtain the second information;
    performing an eigenvalue decomposition on the first information to obtain the second information;
    performing a principal component analysis (PCA) on the first information to obtain the second information; or
    performing a truncation processing on the first information to obtain the second information.

3. The method according to claim 2, wherein the first information comprises an $M \times N$ matrix, where M and N are both positive integers, wherein M is a numerical count of the at least one second device sending the positioning purpose reference signal, and N is a time domain sampling dimension of the positioning purpose reference signal received by the first device, and an element at an $i^{th}$ row and a $j^{th}$ column of the $M \times N$ matrix is determined based on data at a $j^{th}$ time domain sampling position of a positioning purpose reference signal sent by an $i^{th}$ second device and received by the first device.

4. The method according to claim 2 or 3, wherein performing the singular value decomposition on the first information to obtain the second information comprises:

    performing the singular value decomposition on the first information to obtain a unitary matrix U, a first matrix $\Sigma$ and a unitary matrix V corresponding to the first information; and
    determining the second information according to at least one of the unitary matrix U, the first matrix $\Sigma$, or the unitary matrix V.

5. The method according to claim 4, wherein determining the second information according to at least one of the unitary matrix U, the first matrix $\Sigma$, or the unitary matrix V comprises at least one of:

    determining at least one of the unitary matrix U, the first matrix $\Sigma$, or the unitary matrix V as the second information;
    truncating part of data from at least one of the unitary matrix U, the first matrix $\Sigma$, or the unitary matrix V, and determining the data truncated from the at least one of the unitary matrix U, the first matrix $\Sigma$, or the unitary matrix V as the second information; or
    respectively truncating part of data from the unitary matrix U, the first matrix $\Sigma$, and the unitary matrix V, and determining a product of the data truncated from the unitary matrix U, the data truncated from the first matrix $\Sigma$, and the data truncated from the unitary matrix V as the second information.

6. The method according to claim 2 or 3, wherein performing the eigenvalue decomposition on the first information to obtain the second information comprises:

    performing the eigenvalue decomposition on the first information to obtain an eigenvector matrix Q and a second matrix $\Sigma$ corresponding to the first information; and
    determining at least one of the eigenvector matrix Q or the second matrix $\Sigma$ as the second information; and/or truncating part of data from the eigenvector matrix Q and/or the second matrix $\Sigma$, and determining the data truncated from the at least one of the eigenvector matrix Q or the second matrix $\Sigma$ as the second information.

7. The method according to claim 2 or 3, wherein performing the PCA on the first information to obtain the second information comprises:
    performing the PCA on the first information to obtain third information, and determining the third information as the second information; and/or truncating part of data from the third information, and determining the data truncated as the second information.

8. The method according to claim 2 or 3, wherein performing the truncation processing on the first information to obtain the second information comprises at least one of:

    truncating data at first K time domain sampling positions from data at N time domain sampling positions corresponding to a reference signal sent by a second device to obtain the second information;

uniformly truncating K pieces of data from data at N time domain sampling positions corresponding to a reference signal sent by a second device to obtain the second information; or

truncating top K pieces of data with a highest power value from data at N time domain sampling positions corresponding to a reference signal sent by a second device to obtain the second information,

wherein K is a positive integer, and K≤N.

9. The method according to any one of claims 3 to 8, wherein the first information comprises a channel impulse response (CIR), and the M×N matrix is a complex matrix, and data in the M×N matrix is complex data; and

data in the second information is complex data.

10. The method according to any one of claims 1 to 9, wherein reporting to the third device based on the second information comprises at least one of:

reporting the second information to the third device; or

reporting a power value of the data in the second information to the third device.

11. The method according to claim 10, wherein the power value is a modulus of the complex data in the second information.

12. The method according to any one of claims 1 to 11, wherein the first device is a terminal, the second device is a base station, and the positioning purpose reference signal is a positioning reference signal (PRS); or

the first device is a base station, the second device is a terminal, and the positioning purpose reference signal is a sounding reference signal-position (SRS-Pos).

13. The method according to any of claims 1 to 12, wherein the third device is a location management function (LMF).

14. A reporting method, comprising:

receiving, by a third device, a report sent by a first device based on second information, wherein the second information is obtained by performing a first processing to first information, the first processing is used to perform a dimensionality reduction on the first information, the first information is used to implement an artificial intelligence (AI) positioning, the first information is determined according to a positioning purpose reference signal, and the positioning purpose reference signal is sent to the first device by at least one second device; and

performing, by the third device, the AI positioning based on the report sent by the first device.

15. The method according to claim 14, wherein the first information comprises an M×N matrix, where M and N are both positive integers, wherein M is a numerical count of the at least one second device sending the positioning purpose reference signal, and N is a time domain sampling dimension of the positioning purpose reference signal received by the first device, and an element at an $i^{th}$ row and a $j^{th}$ column of the M×N matrix is determined based on data at a $j^{th}$ time domain sampling position of a positioning purpose reference signal sent by an $i^{th}$ second device and received by the first device.

16. The method according to claim 14 or 15, wherein receiving the report sent by the first device based on the second information comprises at least one of:

receiving the second information reported by the first device; or

receiving a power value of data in the second information reported by the first device.

17. The method according to any one of claims 14 to 16, wherein performing the AI positioning based on the report sent by the first device comprises:

obtaining an AI positioning result by inputting information reported by the first device into an AI model.

18. A reporting method, performed by a communication system comprising a first device and a third device, the method comprising at least one of:

receiving, by the first device, a positioning purpose reference signal sent by at least one second device, and determining first information based on the positioning purpose reference signal, wherein the first information is used to implement an artificial intelligence (AI) positioning;

performing, by the first device, a first processing on the first information to obtain second information, wherein the first processing is used to perform a dimensionality reduction on the first information;

reporting, by the first device, to the third device based on the second information;

receiving, by the third device, a report sent by the first device based on the second information; or

performing, by the third device, the AI positioning based on the report sent by the first device.

**19.** A first device, comprising at least one of:

   a receiving module, configured to receive a positioning purpose reference signal sent by at least one second device, and to determine first information based on the positioning purpose reference signal, wherein the first information is used to implement an artificial intelligence (AI) positioning;
   a processing module, configured to perform a first processing on the first information to obtain second information, wherein the first processing is used to perform a dimensionality reduction on the first information; or
   a sending module, configured to report to a third device based on the second information.

**20.** A third device, comprising at least one of:

   a receiving module, configured to receive a report sent by a first device based on second information, wherein the second information is obtained by performing a first processing to first information, the first processing is used to perform a dimensionality reduction on the first information, the first information is used to implement an artificial intelligence (AI) positioning, the first information is determined according to a positioning purpose reference signal, and the positioning purpose reference signal is sent to the first device by at least one second device; or
   a processing module, configured to perform the AI positioning based on the report sent by the first device.

**21.** A communication device, comprising:

   one or more processors,
   wherein the one or more processors are configured to invoke instructions to cause the communication device to perform the reporting method according to any one of claims 1 to 13 or the reporting method according to any one of claims 14 to 17.

**22.** A communication system, comprising a first device and a third device, wherein the first device is configured to implement the reporting method according to any one of claims 1 to 13, and the third device is configured to implement the reporting method according to any one of claims 14 to 17.

**23.** A storage medium having stored instructions that, when executed on a communication device, cause the communication device to perform the reporting method according to any one of claims 1 to 13 or the reporting method according to any one of claims 14 to 17.

communication system 100

first device ——— second device

first device ——— third device

FIG. 1

second device | first device | third device

S2101: sending a positioning purpose
reference signal

S2102: determining first information
based on the positioning purpose
reference signal

S2103: performing a first processing
on the first information to obtain
second information

S2104: reporting based on the second
information

S2105: performing the AI positioning
based on the report sent by the first
device

FIG. 2A

receiving, by a first device, a positioning purpose reference signal sent by at least one second device — 3101

↓

the first device determines first information based on the positioning purpose reference signal — 3102

↓

the first device performs a first processing on the first information to obtain second information — 3103

↓

the first device reports based on the second information — 3104

FIG. 3A

the third device receives a report sent by a first device based on second information — 4101

↓

the third device performs an AI positioning based on the report sent by the first device — 4102

FIG. 4A

the first device receives a positioning purpose reference signal sent by at least one second device, and determines first information based on the positioning purpose reference signal — 5101

the first device performs a first processing on the first information to obtain second information — 5102

the first device reports to the third device based on the second information — 5103

the third device receives a report sent by the first device based on the second information — 5104

the third device performs the AI positioning based on the report sent by the first device — 5105

FIG. 5A

reference signal sending node      channel data measurement node      positioning model inference node

positioning reference signal

obtaining channel measurement data

processing channel measurement data

key channel measurement data with low dimensionality

positioning model inference

FIG. 5B

first device

receiving module

processing module

sending module

FIG. 6A

third device

receiving module

processing module

FIG. 6B

7100

processor 7101

transceiver 7103

interface circuit 7104

memory 7102

FIG. 7A

7200

processor 7201

interface circuit 7202

memory 7203

FIG. 7B

## INTERNATIONAL SEARCH REPORT

| | International application No. |
|---|---|
| | **PCT/CN2023/119196** |

### A. CLASSIFICATION OF SUBJECT MATTER

H04W4/02(2018.01)i

According to International Patent Classification (IPC) or to both national classification and IPC

### B. FIELDS SEARCHED

Minimum documentation searched (classification system followed by classification symbols)

IPC:H04W,H04L,H04Q

Documentation searched other than minimum documentation to the extent that such documents are included in the fields searched

Electronic data base consulted during the international search (name of data base and, where practicable, search terms used)

CNKI, VEN, EXTXTC, WPABS, CNTXT, 3GPP: 参考信号, 定位, 基站, 降维, 截取, 上报, 报告, 位置管理, SMF, 人工智能, AI, report+, reference signal, position+, Base Station, dimensionality, reduction, intercepting, location, artificial, intelligence

### C. DOCUMENTS CONSIDERED TO BE RELEVANT

| Category* | Citation of document, with indication, where appropriate, of the relevant passages | Relevant to claim No. |
|---|---|---|
| X | CN 115413017 A (ZTE CORP.) 29 November 2022 (2022-11-29) description, paragraphs 2-111 | 1-23 |
| A | CN 115914980 A (DATANG MOBILE COMMUNICATIONS EQUIPMENT CO., LTD.) 04 April 2023 (2023-04-04) entire document | 1-23 |
| A | US 2023232266 A1 (BEIJING XIAOMI MOBILE SOFTWARE CO., LTD.) 20 July 2023 (2023-07-20) entire document | 1-23 |
| A | WO 2023160656 A1 (HUAWEI TECHNOLOGIES CO., LTD.) 31 August 2023 (2023-08-31) entire document | 1-23 |

☐ Further documents are listed in the continuation of Box C.  ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **31 May 2024** | **06 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/119196**

| Patent document cited in search report | | | Publication date (day/month/year) | Patent family member(s) | | | Publication date (day/month/year) |
|---|---|---|---|---|---|---|---|
| CN | 115413017 | A | 29 November 2022 | WO | 2022247598 | A1 | 01 December 2022 |
| CN | 115914980 | A | 04 April 2023 | WO | 2023011129 | A1 | 09 February 2023 |
| | | | | KR | 20240034861 | A | 14 March 2024 |
| US | 2023232266 | A1 | 20 July 2023 | WO | 2022011704 | A1 | 20 January 2022 |
| | | | | EP | 4184956 | A1 | 24 May 2023 |
| WO | 2023160656 | A1 | 31 August 2023 | CN | 116709170 | A | 05 September 2023 |

Form PCT/ISA/210 (patent family annex) (July 2022)